# EUROPEAN PATENT APPLICATION

(11) **EP 3 654 714 A1**
(43) Date of publication of application: **20.05.2020**
(21) Application number: 18839504.0
(22) Date of filing: 24.07.2018
(51) Int. Cl.: H04W 72/04

(54) **METHOD FOR CONFIGURING RANDOM ACCESS, NETWORK DEVICE, AND TERMINAL DEVICE**

(30) Priority: 28.07.2017 CN 201710630629
(71) Applicant: Huawei Technologies Co., Ltd., Longgang District Shenzhen, Guangdong 518129 (CN)
(72) Inventor: PANG, Jiyong, Shenzhen Guangdong 518129 (CN); ZHU, Jun, Shenzhen Guangdong 518129 (CN)
(74) Representative: Epping - Hermann - Fischer
(86) International application number: PCT/CN2018/096731
(87) International publication number: WO 2019/019982

(57) **Abstract**

This application relates to the field of wireless communications technologies, and in particular, to a random access technology in an unlicensed frequency band. In a random access configuration method, a network device performs channel listening and obtains a channel occupancy time through contention. If a time-frequency resource used by a terminal device to transmit a random access preamble is configured in the channel occupancy time obtained by the network device through contention, the network device sends downlink control information to the terminal device, and the downlink control information is used to indicate configuration information for transmitting the random access preamble on the time-frequency resource. According to the solution provided in this application, the time-frequency resource for transmitting the random access preamble within the channel occupancy time may be dynamically configured, so as to flexibly use the channel occupancy time and improve communication efficiency in the unlicensed frequency band.

## Description

This application claims priority to Chinese Patent Application No. 201710630629.8, filed with the Chinese Patent Office on July 28, 2017 and entitled "RANDOM ACCESS CONFIGURATION METHOD, NETWORK DEVICE, AND TERMINAL DEVICE", which is incorporated herein by reference in its entirety.

### TECHNICAL FIELD

This application relates to the field of wireless communications technologies, and in particular, to a random access technology applied to an unlicensed frequency band.

### BACKGROUND

A random access process is a basic process in wireless communication, and a main purpose of the random access process is to enable UE to obtain uplink synchronization to perform uplink transmission. The random access process mainly has two manners: (1) contention-based random access process; and (2) non-contention-based random access process.

In the contention random access process, a user needs to autonomously select a time-frequency resource used to transmit a random access preamble (random access preamble), and a time-frequency resource available for selection is usually configured by an evolved NodeB (evolved NodeB, eNB) in a broadcast message in a fixed or semi-static manner. In the non-contention random access process, both a time-frequency resource used by a user to transmit a random access preamble and the random access preamble may be specified by an eNB.

In research of a 5th generation (5th-generation, 5G) mobile communications system, a new wireless transmission technology and a new system architecture are introduced to further exploit a new spectrum resource, so that the 5G system overwhelms an LTE system in terms of resource utilization, a system throughput, and a spectrum resource. In this case, in the 5G system, how to more efficiently use a random access resource in an unlicensed frequency band is a problem that is urgent to be resolved.

### SUMMARY

Embodiments of this application describe a random access configuration method applied to an unlicensed frequency band, so as to improve communication efficiency of a communications system by properly configuring a channel occupancy time and a time domain resource for transmitting a random preamble by a terminal device.

According to a first aspect, this application provides a random access configuration method, applied to an unlicensed frequency band. The random access configuration method includes: performing, by a network device, channel listening and obtaining a channel occupancy time through contention; and if a time-frequency resource used by a terminal device to transmit a random access preamble is configured in the channel occupancy time, sending, by the network device, downlink control information to the terminal device, where the downlink control information is used to indicate configuration information for transmitting the random access preamble on the time-frequency resource.

In the unlicensed frequency band, before transmitting data or signaling, the network device needs to perform channel listening to determine whether a channel is idle. A preset time domain resource that is for transmitting the random access preamble and that falls within the channel occupancy time is flexibly configured, so that the channel occupancy time obtained through contention can be properly used to improve communication efficiency.

In a possible design, the downlink control information is used to indicate that the terminal device is prohibited from transmitting the random access preamble on all or a part of the time-frequency resource.

In another possible design, the sending, by the network device, downlink control information to the terminal device includes: sending, by the network device, the downlink control information to the terminal device at a first time point, where the downlink control information is used to indicate that the terminal device is prohibited from transmitting the random access preamble within a remaining channel occupancy time after the first time point.

In this case, when the network device needs to transmit a relatively large amount of data or signaling, transmitting the random access preamble is prohibited in all or a part of the preset time domain resource within the channel occupancy time, to dynamically adjust allocation of the time domain resource, flexibly perform transmission, and improve communication efficiency. According to a second aspect, this application further provides another random access configuration method, applied to an unlicensed frequency band. The random access configuration method includes: receiving, by a terminal device, downlink control information sent by a network device, where the downlink control information is sent by the network device after the network device obtains a channel occupancy time through contention, a time-frequency resource used by the terminal device to transmit a random access preamble is configured in the channel occupancy time, and the downlink control information is used to indicate configuration information for transmitting the random access preamble on the time-frequency resource; and transmitting, by the terminal device, the random access preamble based on the downlink control information.

Based on the random access configuration method according to the first aspect or the second aspect, in still another possible design, the downlink control information is used to configure the terminal device to perform or not perform LBT before the terminal device transmits the random access preamble.

In still another possible design, when the LBT is performed, the downlink control information is used to indicate a type of the LBT performed by the terminal device before the terminal device transmits the random access preamble, and the type of the LBT includes a second type of LBT (cat. 2 LBT). The cat. 2 LBT uses relatively short clear channel assessment (clear channel assessment, CCA) duration, reduce a time for performing the LBT.

According to a third aspect, this application provides a network device, configured to perform the random access configuration method provided in the first aspect. The network device includes: a processor, configured to perform channel listening and obtain a channel occupancy time through contention; and a transceiver, configured to send downlink control information to one or more terminal devices. It has been configured that the one or more terminals transmit the random preamble on a preset time domain resource. When the preset time domain resource is within the channel occupancy time, the downlink control information is used to indicate configuration information of the random access preamble transmitted by the one or more terminal devices within the channel occupancy time.

According to a fourth aspect, this application provides a computer readable storage medium. The computer readable storage medium stores an instruction, and when the instruction is run on a computer, the computer is enabled to perform the method in the first aspect.

According to a fifth aspect, this application provides a computer program product including an instruction, and when the computer program product is run on a computer, the computer is enabled to perform the method in the first aspect.

According to a sixth aspect, this application provides a terminal device, configured to perform the random access configuration method provided in the second aspect. The terminal device includes a processor and a transceiver. The transceiver is configured to receive downlink control information sent by a network device. The downlink control information is sent by the network device after the network device obtains a channel occupancy time through contention, a time-frequency resource used by the terminal device to transmit a random access preamble is configured in the channel occupancy time, and the downlink control information is used to indicate configuration information for transmitting the random access preamble on the time-frequency resource. The processor is configured to control, based on the downlink control information, the transceiver to transmit the random access preamble.

According to a seventh aspect, this application provides a computer readable storage medium. The computer readable storage medium stores an instruction, and when the instruction is run on a computer, the computer is enabled to perform the method in the second aspect.

According to an eighth aspect, this application provides a computer program product including an instruction, and when the computer program product is run on a computer, the computer is enabled to perform the method in the second aspect.

### BRIEF DESCRIPTION OF DRAWINGS

The following provides more detailed descriptions of the embodiments of this application with reference to the accompanying drawings.
FIG. 1 is a schematic diagram of a possible application scenario according to an embodiment of this application;
FIG. 2 is a schematic flowchart of a possible resource indication method according to an embodiment of this application;
FIG. 3 is a schematic diagram of a channel occupancy time according to an embodiment of this application;
FIG. 4 is a schematic diagram of a channel occupancy time according to another embodiment of this application;
FIG. 5 is a schematic diagram of a channel occupancy time according to still another embodiment of this application;
FIG. 6 is a simplified schematic structural diagram of a network device according to an embodiment of this application; and
FIG. 7 is a simplified schematic structural diagram of a terminal device according to an embodiment of this application.

### DESCRIPTION OF EMBODIMENTS

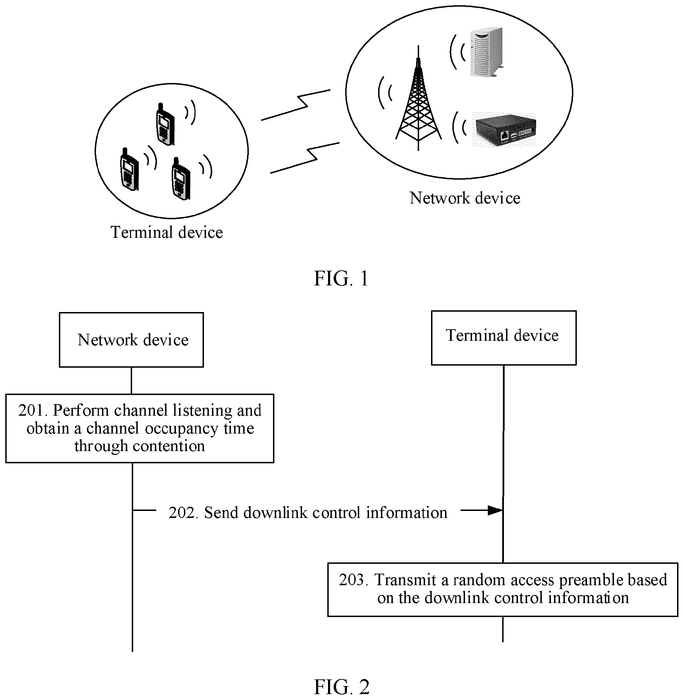

The following clearly and completely describes technical solutions in the embodiments of this application with reference to the accompanying drawings in the embodiments of this application. FIG. 1 is a simplified schematic diagram of a network architecture applied in an embodiment of this application. The network architecture may be a network architecture of a wireless communications system, and may include a network device and a terminal device. The network device is connected to the terminal device by using a wireless communications technology. It should be noted that a quantity and forms of terminal devices and network devices shown in FIG. 1 do not constitute a limitation on this embodiment of this application. In different implementations, one network device may be connected to one or more terminal devices. The network device may further be connected to a core network device, and the core network device is not shown in FIG. 1.

It should be noted that the wireless communications system in this embodiment of this application includes but is not limited to a narrowband Internet of things (narrow band-internet of things, NB-IoT) system, a global system for mobile communications (global system for mobile communications, GSM), an enhanced data rates for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronization code division multiple access, TD-SCDMA) system, a long term evolution (long term evolution, LTE) System, a 5th generation (5th-generation, 5G) mobile communications system, and a future mobile communications system.

In this embodiment of this application, the network device is an apparatus that is deployed in a radio access network to provide a wireless communication function for a terminal device. The network device may include but is not limited to a base station (Base Station, BS), a network controller, a transmission and reception point (transmission and reception point, TRP), a mobile switching center, or the like. For example, an apparatus directly communicating with the terminal device through a radio channel is generally a base station. The base station may include a macro base station, a micro base station, a relay station, an access point, a remote radio unit (Remote Radio Unit, RRU), or the like in various forms. Certainly, wireless communication with the terminal device may alternatively be performed by another network device that has a wireless communication function. This is not limited in this application. It should be noted that in different systems, a device with a base station function may have different names. For example, in an LTE network, the device is referred to as an evolved NodeB (evolved NodeB, eNB, or eNodeB); in a 3rd generation (3rd Generation, 3G) network, the device is referred to as a NodeB (NodeB) or the like; and in a 5G network, the device is referred to as a 5G base station (NR NodeB, gNB).

A terminal device is also referred to as user equipment (user equipment, UE), a mobile station (mobile station, MS), a mobile terminal (mobile terminal, MT), or the like, and is a device that provides a user with voice and/or data communication, for example, a handheld device, a vehicle-mounted device, a wearable device, or a computing device having a wireless connection function, or another processing device connected to a wireless modem. Currently, the terminal device is, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal self-driving (self driving), a wireless terminal in a remote medical surgery (remote medical surgery), a wireless terminal in a smart grid (smart grid), a wireless terminal in transportation safety (transportation safety), a wireless terminal in a smart city (smart city), or a wireless terminal in a smart home (smart home). In this application, terms "network" and "system" may be interchangeably used, but a person skilled in the art may understand meanings of the terms. In addition, some English abbreviations in this specification are used to describe the embodiments of this application by using an LTE system as an example, and the English abbreviations may change with network evolution. For specific evolution, refer to a description in a corresponding standard.

The wireless communications systems in the embodiments of this application may support a multi-carrier (multi-carrier) (waveform signals of different frequencies) operation. A multi-carrier transmitter may simultaneously transmit modulation signals on a plurality of carriers. For example, each communication connection may carry a multi-carrier signal modulated by using different radio technologies. Each modulation signal may be sent on different carriers, or may carry control information (for example, a reference signal or a control channel), overhead information (Overhead Information), data, and the like.

The foregoing has mentioned that the technical solutions provided in this application may be applied to an unlicensed frequency band, and in particular to a random access process in the unlicensed frequency band. For a wireless communications network that supports an unlicensed frequency band, a listen before talk (listen before talk, LBT) rule generally needs to be followed before transmission is performed on the unlicensed frequency band. To be specific, a channel is listened and clear channel assessment (clear channel assessment, CCA) is performed before sending. The CCA may be determined based on a channel energy threshold. If the channel is idle, sending may be performed. Otherwise, sending cannot be performed. An LBT type is different based on different application scenarios, and listening duration used by the LBT type is also different. For example, there may be at least two LBT types. One type is a type in which random backoff and a relatively long listening time need to be performed, and may be referred to as a fourth type of LBT (Cat 4 LBT), and the other type is a type in which a relatively short listening time needs to be performed, and may be referred to as a second type of LBT (Cat 2 LBT). It should be noted that division of the LBT type is not intended to limit the implementations of this application.

In the following, random access is described. The random access is an important process in wireless communication, and a main purpose of the random access is to enable a terminal device to obtain uplink synchronization to perform uplink transmission. A random access process mainly has two manners: (1) contention-based random access; and (2) non-contention-based random access. Regardless of the contention-based random access or the non-contention-based random access, the terminal device needs to send a random access preamble (random access preamble) to a base station. A main function of the random access preamble is to notify the base station that there is a random access request, so that the base station can estimate a transmission delay between the base station and the terminal device. In this way, the base station calibrates an uplink time and notifies the terminal device of calibration information.

For the contention-based random access, the base station notifies, in broadcast information, a random access preamble format available to a current cell (there may be a plurality of preambles that conform to a preamble format) and a time-frequency resource set used to transmit a random access preamble. When initiating the random access, the terminal device randomly selects a preamble that conforms to a random access preamble format, and randomly selects a time-frequency resource from the available time-frequency resource set to send the selected random access preamble.

For the non-contention-based random access, the base station specifies, for the terminal device, a time-frequency resource and a preamble that are used by the terminal device for the random access. The base station specifies a random access preamble for the terminal device or transmits a time-frequency resource of the random access preamble by using radio resource control (radio resource control, RRC) signaling and/or downlink control information (downlink control information, DCI) on a physical downlink control channel (physical downlink control channel, PDCCH), so as to avoid a random access conflict between terminal devices.

With reference to FIG. 2 to FIG. 5, a resource indication method provided in an embodiment of this application is described in detail below.

FIG. 2 is a schematic flowchart of a resource indication method according to an embodiment of this application. The resource indication method is applied to interaction between a network device and one or more terminal devices. The one or more terminals are allowed to transmit a random preamble on a predetermined time domain resource. In other words, the one or more terminals can transmit a random preamble on a predetermined time domain resource. The predetermined time resource may be periodic or aperiodic. The resource indication method includes at least the following steps.

Step 201: The network device performs channel listening and obtains a channel occupancy time (channel occupy time, COT) through contention.

When a channel listening result is "idle", the network device obtains the channel occupancy time through contention, to transmit data or signaling.

For example, the channel occupancy time may be in a form of a subframe (subframe), and a length of each subframe may be 1 ms.

Alternatively, the channel occupancy time may be in a form of a slot (slot), and each slot includes seven or 14 orthogonal frequency division multiplexing (orthogonal frequency division multiplexing, OFDM) symbols.

Alternatively, the channel occupancy time may be in a form of a mini-slot (mini-slot), and a quantity of OFDM symbols included in each mini-slot is less than a quantity of OFDM symbols included in one slot.

The foregoing time form is merely an example, and a person skilled in the art may describe the channel occupancy time in another time form. In the following implementation, an example in which the channel occupancy time is in a form of a slot is used for description. However, a specific time form used by the channel occupancy time is not intended to limit the random access configuration method in this application.

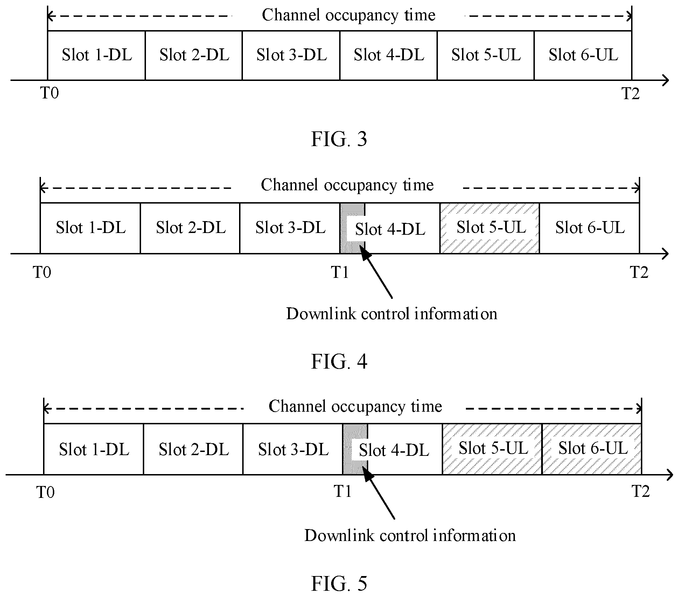

For example, referring to FIG. 3, in this implementation, the network device obtains a channel at a moment T0 through contention, a start moment of channel occupancy is T0, and an end moment is T2. The channel occupancy time is six slots that include four downlink (downlink, DL) transmission slots: a slot 1-DL, a slot 2-DL, a slot 3-DL, and a slot 4-DL; and two uplink (uplink, UL) transmission slots: a slot 5-UL and a slot 6-UL. In another embodiment, a percentage of uplink transmission slots in the channel occupancy time may be different from a percentage of downlink transmission slots in the channel occupancy time.

Step 202: If a time-frequency resource used by the terminal device to transmit a random access preamble is configured in the channel occupancy time, the network device sends downlink control information to the terminal device, where the downlink control information is used to indicate configuration information for transmitting the random access preamble on the time-frequency resource.

In this implementation, one terminal device is first used as an example for description. It may be understood that, for an implementation in which there are a plurality of terminal devices, refer to this implementation in which there is one terminal device. Details are not described herein again. The downlink control information (in this case, the downlink control information may be referred to as random access indication information) is used to indicate that the terminal device is prohibited from transmitting the random access preamble on the time-frequency resource within the channel occupancy time. To be specific, the downlink control information is used to indicate that the terminal device is prohibited from transmitting the random access preamble on a preset time-frequency resource within the current channel occupancy time. Specifically, the downlink control information may indicate that transmitting the random access preamble is prohibited in a plurality of slots within the current channel occupancy time. Alternatively, the downlink control information may indicate that transmitting the random access preamble is prohibited in a specific slot within the current channel occupancy time. In this case, when a relatively large amount of data or signaling needs to be transmitted within the channel occupancy time, the network device may continue to perform transmission by using a time domain resource for transmitting the random preamble, and the random preamble is transmitted on a time domain resource other than the prohibited time domain resource, so as to dynamically adjust allocation of time domain resources, flexibly perform transmission, and improve communication efficiency.

Referring to FIG. 4, the slot 5-UL is used as a preset time domain resource used by the terminal device to transmit the random preamble. The network device sends the downlink control information at a moment T1, to instruct the terminal device not to transmit the random access preamble in the slot 5-UL.

Referring to FIG. 5, for example, both the slot 5-UL and the slot 6-UL are time domain resources for transmitting the random access preamble. The downlink control information may indicate that transmitting the random access preamble is prohibited in the slot 5-UL or the slot 6-UL, or indicate that transmitting the random access preamble is prohibited in both the slot 5-UL and the slot 6-UL. The network device sends the downlink control information to the one or more terminal devices at a first time point T1. The downlink control information is used to indicate how the terminal device transmits the random access preamble within a remaining channel occupancy time after the first time point, in other words, indicate a configuration of transmitting the random access preamble in a time window from T1 to T2. In different implementations, the time window from T1 to T2 may be represented by using an absolute time offset or a relative time offset.

In another implementation, the downlink control information may further indicate, by default, the first time domain resource used to transmit the random access preamble after the moment T1 (namely, a moment at which the downlink control information is sent).

In still another implementation, the downlink control information (in this case, the downlink control information is referred to as LBT indication information) is used to configure the terminal device to perform or not perform LBT before the terminal device transmits the random access preamble. It has been noted in the foregoing that when working in an unlicensed frequency band, before sending the random access preamble, the terminal device needs to perform LBT to determine whether a channel is idle. Only when determining that the channel is idle, the terminal device can transmit the random access preamble on the predetermined time resource. However, when the network device has preempted a channel occupancy time, the network device can perform receiving. In this case, the network device may instruct the terminal device not to perform LBT. When reaching a preset time domain resource, the terminal device sends the random preamble to the network device. Therefore, an access time can be reduced. For example, the network device may add identifiers of the one or more terminal devices in an explicit manner, or add identifiers of the one or more terminals in an implicit manner, to instruct the terminal device not to perform LBT.

In another implementation, when LBT needs to be performed, the downlink control information may be used to indicate a type of the LBT performed by the one or more terminal devices before the one or more terminal devices transmit the random access preamble. The type of the LBT includes but is not limited to: performing listening by using relatively short clear channel assessment (clear channel assessment, CCA) duration, for example, a second type of LBT (cat 2 LBT), so that relatively short duration may be used when LBT needs to be performed, so as to improve random access efficiency.

For example, the downlink control information may indicate the foregoing random access information or the foregoing LBT indication information by using 2 bits. "10" is used to indicate that a preset time domain resource for the random access preamble within the current channel occupancy time is unavailable. "00" is used to indicate that cat 2 LBT is performed before transmission of the random access preamble within the current channel occupancy time. "01" is used to indicate that no LBT is performed before the transmission of the random access preamble within the current channel occupancy time. "11" is a reservation indication. It may be understood that the indications of "10", "00", "01", and "11" are merely examples, and constitute no limitation. In different implementations, content indicated by "10", "00", "01", and "11" may be exchanged. Step 203: The terminal device receives the downlink control information, and transmits the random access preamble based on the downlink control information.

The terminal device may identify the downlink control information for the terminal device by using a descrambling operation. For example, in a scenario of one terminal device, the terminal device may descramble received signaling based on a radio network temporary identifier (radio network temporary identifier, RNTI) of the terminal device to obtain downlink control information of the terminal device. In a scenario of a plurality of terminal devices, the plurality of terminal devices may descramble received signaling based on a common RNTI to obtain downlink control information of the plurality of terminal devices. The plurality of terminal devices may be classified by a cell or a group. This is not limited.

For example, when the downlink control information indicates that transmitting the random access preamble is prohibited on the preset time domain resource within the channel occupancy time, the terminal device does not transmit the random access preamble on the corresponding time domain resource, but transmits the random access preamble by randomly selecting another time domain resource from a time domain resource set used to transmit the random access preamble.

For example, when the downlink control information indicates that the terminal device does not perform LBT before the terminal device transmits the random access preamble within the channel occupancy time, and the preset time domain resource is reached, the terminal device sends the random access preamble to the network device without a need of waiting for the LBT.

For example, when the downlink control information indicates the type of the LBT performed before a terminal transmits the random access preamble within the channel occupancy time, and the preset time domain resource is reached, the terminal device uses the indicated LBT type, reduce a time for performing LBT.

Through application of the foregoing random access configuration method, time domain resource allocation can be dynamically adjusted, and the channel occupancy time can be properly used, so as to improve efficiency of a communications system.

In another implementation, the downlink control information may further include one or more of the following parameters, to dynamically notify the terminal device of the time-frequency resource for the random access preamble.
1. A time domain start moment, used to indicate a start position of a time-frequency resource in time domain. Generally, the time domain start moment is aligned with a boundary of an OFDM symbol, a boundary of a mini-slot, a boundary of a slot, or a boundary of a subframe. It should be noted that because a format of a preamble determines a time required for preamble transmission, when the time domain start moment is indicated, the terminal device may obtain a time domain resource used to transmit the preamble. For example, the time domain start moment may be implemented in one or more of the following manners:
   (1) Absolute offset: A start moment or an end moment of a time domain resource occupied by the downlink control information is used as a reference moment to indicate a time offset between the reference moment and a start moment of the time-frequency resource. For example, in a unit of microsecond (µs), 10 bits of notification downlink control information may represent a time offset range from 0 to 1023 (including 0 to 1023) µs.
   (2) Symbol-based relative offset: A start symbol or an end symbol of the time domain resource occupied by the downlink control information is used as a reference symbol to indicate an offset (in a form of a symbol) between the reference symbol and a start symbol of a time-frequency resource allocated to the terminal device for random access. For example, it is assumed that a maximum of 64 symbols are allowed between the reference symbol and a time-domain start moment of the time-frequency resource allocated to the terminal device for random access. If an indication granularity is one symbol, six bits of indication overheads are required. If an indication granularity is two symbols, five bits of indication overheads are required. The network device may further indicate an indication granularity of the offset in the downlink control information.
   (3) Relative offset based on a frame structure hierarchy: An offset is indicated based on a configuration of a frame structure. For example, the configuration of the frame structure, for example, a hierarchy of subframe-slot-mini-slot-symbol, is used to indicate an offset in a time dimension between the downlink control information and a to-be-notified time-frequency resource for random access. It is assumed that time offsets in four different units: a subframe, a slot, a mini-slot, and a symbol are represented by using two bits. In this case, 11100100 represents that the offset is 3 ms + 2 slots + 1 mini-slot, and 00111001 represents that the offset is 3 slots + 2 mini-slots + 1 OFDM symbol.
   It should be noted that, in different wireless communications systems, a length of an OFDM symbol in time domain may be variable, or may be invariant. For example, the length of the OFDM symbol in time domain is not fixed, the length of the OFDM symbol varies with a subcarrier spacing. For an OFDM symbol having a conventional cyclic prefix (cyclic prefix, CP), a length of an OFDM symbol whose subcarrier spacing is 15 KHz is equal to a sum of lengths of two OFDM symbols whose subcarrier spacing is 30 KHz, and is equal to a sum of lengths of four OFDM symbols whose subcarrier spacing is 60 KHz. Therefore, if lengths of OFDM symbols are different, and a quantity of OFDM symbols included in a subframe, a slot, or a mini-slot is different. In view of this, for the second manner and the third manner, a premise is that the terminal device may learn, by using the following several methods, a parameter configuration corresponding to an OFDM symbol:
   (1) Explicit indication: An explicit indication method is that the network device further indicates, in the downlink control information indicating the symbol-based relative offset, a parameter configuration corresponding to the OFDM symbol, for example, at least one of a length, a subcarrier spacing, or a cyclic prefix (cyclic prefix, CP) type or length. Alternatively, another explicit indication method is that the network device instructs, in control signaling other than the downlink control information indicating the symbol-based relative offset, to obtain a parameter configuration corresponding to the OFDM symbol, for example, at least one of a length, a subcarrier spacing, and a cyclic prefix (cyclic prefix, CP) type or length.
   (2) Implicit indication: An implicit indication method is that, by default, a parameter configuration corresponding to an OFDM symbol is the same as a parameter configuration used to send the downlink control information. Alternatively, another implicit indication method is that, by default, a subcarrier spacing corresponding to an OFDM symbol is the same as a maximum frequency-domain subcarrier spacing allowed for downlink transmission performed by the network device. Alternatively, a still another implicit indication method is that, by default, the subcarrier spacing corresponding to the OFDM symbol is the same as a subcarrier spacing of a random access preamble corresponding to a random access preamble format allowed on a time-frequency resource.
2. A frequency domain start position, used to indicate a position of the time-frequency resource in frequency domain. Generally, a frequency domain position is measured by a frequency domain width (for example, 12 subcarriers) of a resource block (resource block, RB). A format of a random access preamble determines an RB width of the random access preamble in frequency domain (to be specific, a quantity of occupied RBs and consecutive placement within RBs). In this case, the network device provides a frequency domain start position, and the terminal device may obtain all frequency domain resources used to transmit the preamble.

In addition, in an unlicensed frequency band, a plurality of RBs used to transmit the preamble are inconsecutively placed at an equal spacing in frequency domain (for example, in an enhanced licensed assisted access (enhanced licensed assisted access, eLAA) technology introduced in LTE release 14, frequency domain resources occupied by uplink data transmission on the unlicensed frequency band are allocated in a form of a resource interlace (interlace) with a spacing of 10 RBs). In this case, a start RB position indicated by the network device is a start RB position of a resource interlace occupied for transmitting the preamble, that is, an index (index) of the resource interlace. A time-frequency resource for transmitting the random access preamble is dynamically indicated, to flexibly allocate a resource and adapt to a listen before talk transmission mechanism in an unlicensed frequency band scenario.

The foregoing describes in detail implementations of the random access configuration method in this application, and the following continues to describe implementations of the network device and the terminal device in this application.

An implementation of the network device is first described. In a specific example, a structure of a network device includes a processor (or referred to as a controller) and a transceiver. In a possible example, the structure of the network device may further include a communications unit. The communications unit is configured to support communication with another network side device, such as communication with a core network node. In a possible example, the structure of the network device may further include a memory. The memory is coupled to the processor and is configured to store a program instruction and data that are necessary for the network device.

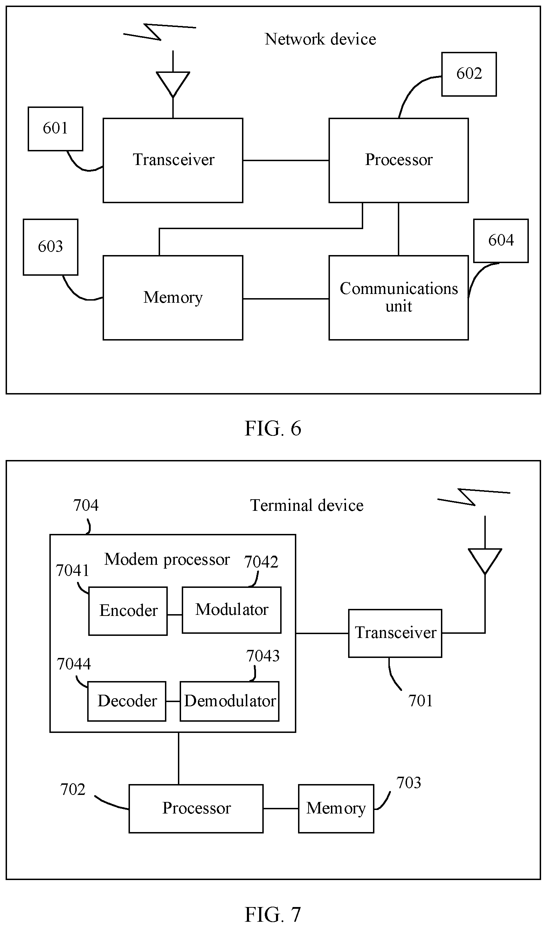

FIG. 6 is a possible simplified schematic structural diagram of the network device in the foregoing implementation. In an example corresponding to FIG. 6, a structure of the network device in this application includes a transceiver 601, a processor 602, a memory 603, and a communications unit 604. The transceiver 601, the processor 602, the memory 603, and the communications unit 604 are connected by using a bus.

On a downlink, to-be-sent data or signaling (including the foregoing downlink control information) is adjusted by the transceiver 601 to provide output sampling and generate a downlink signal. The downlink signal is transmitted to the terminal device in the foregoing embodiment by using an antenna. On an uplink, the antenna receives an uplink signal (including the foregoing random access preamble) transmitted by the terminal device in the foregoing embodiment. The transceiver 602 adjusts a signal received from the antenna, and provides input sampling. In the processor 602, service data and a signaling message are processed, for example, modulating to-be-sent data and generating an SC-FDMA symbol. These units perform processing based on a radio access technology (for example, an access technology in LTE, 5G, and another evolved system) used by a radio access network. In an implementation shown in FIG. 6, the transceiver 602 is integrated by a transmitter and a receiver. In another implementation, the transmitter and the receiver may alternatively be independent of each other.

The processor 602 is further configured to control and manage an action of the network device, and is configured to perform processing performed by the network device in the foregoing embodiment, for example, configured to control the network device to perform processing on the downlink control information and/or perform another process of the technology described in this application. In an example, the processor 602 is configured to support the network device in performing the processing processes related to the network device in FIG. 2 to FIG. 6. For example, the processor 602 performs channel listening and obtains a channel occupancy time through contention. Specifically, the processor 602 performs channel listening based on the signal received by the transceiver 602 from the antenna, and controls the transceiver to send a signal from the antenna to occupy a channel. In different implementations, the processor 602 may include one or more processors, for example, include one or more central processing units (Central Processing Unit, CPU). The processor 602 may be integrated into a chip, or may be a chip itself.

The memory 603 is configured to store a related instruction and related data, and program code and data of the network device. In different implementations, the memory 603 includes but is not limited to a random access memory (Random Access Memory, RAM), a read-only memory (Read-Only Memory, ROM), an erasable programmable read only memory (Erasable Programmable Read Only Memory, EPROM), or a compact disc read-only memory (Compact Disc Read-Only Memory, CD-ROM).

It may be understood that FIG. 6 shows only a simplified design of the network device. In actual application, the network device may include any quantity of transmitters, receivers, processors, memories, and the like, and all network devices that can implement this application fall within the protection scope of this application.

In the following, an implementation of the terminal device is described. In a specific example, a structure of the terminal device includes a processor (or referred to as a controller), a transceiver, and a modem processor. In a possible example, the structure of the network device may further include a memory. The memory is coupled to the processor and is configured to store a program instruction and data that are necessary for the network device.

FIG. 7 is a simplified schematic diagram of a possible design structure of the terminal device in the foregoing embodiment. The terminal device includes a transceiver 701, a processor 702, a memory 703, and a modem processor 704. The transceiver 701, the processor 702, the memory 703, and the modem processor 704 are connected by using a bus.

The transceiver 701 adjusts (for example, performs analog conversion, filtering, amplification, and up-conversion on) output sampling and generates an uplink signal. The uplink signal is transmitted to the network device in the foregoing embodiment by using an antenna. In a downlink, the antenna receives the downlink signal transmitted by the base station in the foregoing embodiment. The transceiver 70 adjusts (for example, performs filtering, amplification, down-conversion, and digitization on) the signal received from the antenna and provides input sampling. For example, in the modem processor 704, an encoder 7041 receives service data and a signaling message that are to be sent on an uplink, and processes (for example, performs formatting, encoding, and interleaving on) the service data and the signaling message. A modulator 7042 further processes (for example, performs symbol mapping and modulation on) encoded service data and an encoded signaling message, and provides output sampling. A demodulator 7043 processes (for example, demodulates) the input sampling and provides symbol estimation. A decoder 7044 processes (for example, de-interleaves and decodes) the symbol estimation and provides decoded data and a decoded signaling message that are to be sent to the terminal device. The encoder 7041, the modulator 7042, the demodulator 7043, and the decoder 7044 may be implemented by the combined modem processor 704. These units perform processing based on a radio access technology (for example, an access technology in LTE, 5G, and another evolved system) used by a radio access network. In an implementation shown in FIG. 7, the transceiver 701 is integrated by a transmitter and a receiver. In another implementation, the transmitter and the receiver may alternatively be independent of each other.

The processor 702 controls and manages an action of the terminal device, and is configured to perform processing performed by the terminal device in the foregoing embodiment, for example, configured to control the terminal device to transmit the random access preamble based on received downlink control information and/or to perform another process of the technology described in the present invention. In an example, the processor 702 is configured to support the terminal device in performing the processing processes related to the terminal device in FIG. 2 to FIG. 5. For example, the transceiver 701 is configured to receive, by using an antenna, downlink control information sent by the network device, and the processor 702 is configured to control, based on the downlink control information, the transceiver to send or not to send the random access preamble by using the antenna. In different implementations, the processor 702 may include one or more processors, for example, include one or more CPUs. The processor 702 may be integrated into a chip, or may be a chip itself.

The memory 703 is configured to store a related instruction and related data, and program code and data of the terminal device. In different implementations, the memory 703 includes but is not limited to a random access memory (Random Access Memory, RAM), a read-only memory (Read-Only Memory, ROM), an erasable programmable read only memory (Erasable Programmable Read Only Memory, EPROM), or a compact disc read-only memory (Compact Disc Read-Only Memory, CD-ROM).

It may be understood that FIG. 7 shows only a simplified design of the terminal device. In actual application, the terminal device may include any quantity of transmitters, receivers, processors, memories, and the like, and all terminal devices that can implement this application fall within the protection scope of this application.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the processes or functions according to the embodiments of the present invention are all or partially generated. The computer may be a general-purpose computer, a dedicated computer, a computer network, or another programmable apparatus. The computer instructions may be stored in a computer readable storage medium or may be transmitted from one computer readable storage medium to another computer readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

A person skilled in the art should be aware that in the foregoing one or more examples, functions described in this application may be implemented by using hardware, software, firmware, or any combination thereof. When implemented by software, the foregoing functions may be stored in a computer readable medium or transmitted as one or more instructions or code in the computer readable medium. The computer readable medium includes a computer storage medium and a communications medium, where the communications medium includes any medium that facilitates transmission of a computer program from one place to another. The storage medium may be any available medium accessible to a general-purpose or dedicated computer.

## Claims

1. A random access configuration method, applied to an unlicensed frequency band, wherein the random access configuration method comprises:
performing, by a network device, channel listening and obtaining a channel occupancy time through contention; and
if a time-frequency resource used by a terminal device to transmit a random access preamble is configured in the channel occupancy time, sending, by the network device, downlink control information to the terminal device, wherein the downlink control information is used to indicate configuration information for transmitting the random access preamble on the time-frequency resource.

2. The method according to claim 1, wherein the downlink control information is used to indicate that the terminal device is prohibited from transmitting the random access preamble on all or a part of the time-frequency resource.

3. The method according to claim 2, wherein the sending, by the network device, downlink control information to the terminal device comprises:
sending, by the network device, the downlink control information to the terminal device at a first time point, wherein the downlink control information is used to indicate that the terminal device is prohibited from transmitting the random access preamble within a remaining channel occupancy time after the first time point.

4. The method according to claim 1, wherein the downlink control information is used to configure the terminal device to perform or not perform LBT before the terminal device transmits the random access preamble.

5. The method according to claim 4, wherein when the LBT is performed, the downlink control information is used to indicate a type of the LBT performed by the one or more terminal devices before the terminal device transmits the random access preamble, and the type of the LBT comprises a second type of LBT.

6. A random access configuration method, applied to an unlicensed frequency band, and comprising:
receiving, by a terminal device, downlink control information sent by a network device, wherein the downlink control information is sent by the network device after the network device obtains a channel occupancy time through contention, a time-frequency resource used by the terminal device to transmit a random access preamble is configured in the channel occupancy time, and the downlink control information is used to indicate configuration information for transmitting the random access preamble on the time-frequency resource; and
transmitting, by the terminal device, the random access preamble based on the downlink control information.

7. A network device, applicable to an unlicensed frequency band, wherein the network device comprises a processor and a transceiver, wherein
the processor is configured to perform channel listening and obtain a channel occupancy time through contention; and
if a time-frequency resource used by a terminal device to transmit a random access preamble is configured in the channel occupancy time, the transceiver is configured to send downlink control information to the terminal device, wherein the downlink control information is used to indicate configuration information for transmitting the random access preamble on the time-frequency resource.

8. The network device according to claim 7, wherein the downlink control information is used to indicate that the terminal device is prohibited from transmitting the random access preamble within the channel occupancy time.

9. The network device according to claim 8, wherein the transceiver is configured to:
send the downlink control information to the terminal at a first time point, wherein the downlink control information is used to indicate that the terminal device is prohibited from transmitting the random access preamble within a remaining channel occupancy time after the first time point.

10. The network device according to claim 7, wherein the downlink control information is used to configure the one or more terminal devices to perform or not perform LBT before the terminal device transmits the random access preamble.

11. The network device according to claim 10, wherein when the LBT is performed, the downlink control information is used to indicate a type of the LBT performed by the one or more terminal devices before the terminal device transmits the random access preamble, and the type of the LBT comprises a second type of LBT.

12. A terminal device, applicable to an unlicensed frequency band, wherein the terminal device comprises a processor and a transceiver, wherein
the transceiver is configured to receive downlink control information sent by a network device, wherein the downlink control information is sent by the network device after the network device obtains a channel occupancy time through contention, a time-frequency resource used by the terminal device to transmit a random access preamble is configured in the channel occupancy time, and the downlink control information is used to indicate configuration information for transmitting the random access preamble on the time-frequency resource; and
the processor is configured to control, based on the downlink control information, the transceiver to transmit the random access preamble.

13. A computer storage medium, comprising an instruction, wherein when the instruction is run on a computer, the computer is enabled to perform the method according to any one of claims 1 to 5.

14. A computer storage medium, comprising an instruction, wherein when the instruction is run on a computer, the computer is enabled to perform the method according to claim 6.

15. A network device, wherein the network device comprises a memory and one or more processors, the memory is coupled to the one or more processors, and the one or more processors are configured to perform the method according to any one of claims 1 to 5.

16. A network device, wherein the network device comprises one or more processors, and the one or more processors are coupled to a memory, and are configured to read an instruction in the memory and perform, according to the instruction, the method according to any one of claims 1 to 5.

17. A terminal device, wherein the terminal device comprises a memory and one or more processors, the memory is coupled to the one or more processors, and the one or more processors are configured to perform the method according to claim 6.

18. A terminal device, wherein the network device comprises one or more processors, and the one or more processors are coupled to a memory, and are configured to read an instruction in the memory and perform, according to the instruction, the method according to claim 6.
